# EUROPEAN PATENT SPECIFICATION

(11) **EP 3 198 831 B1**
(45) Date of publication and mention of the grant of the patent: **21.10.2020**
(21) Application number: 15843108.0
(22) Date of filing: 08.09.2015
(51) Int. Cl.: H04L 29/06, H04L 29/08

(54) **VARIABLE INTERVAL FOR PERIODIC FIX REQUESTS OF MULTIPLE CLIENTS**
VARIABLES INTERVALL FÜR PERIODISCHE REPARATURANFORDERUNGEN MEHRERER CLIENTS
INTERVALLE VARIABLE POUR DES DEMANDES DE RELEVÉS PÉRIODIQUES DE MULTIPLES CLIENTS

(30) Priority: 26.09.2014 US 201414499071
(43) Date of publication of application: 02.08.2017
(73) Proprietor: Intel Corporation, Santa Clara, CA 95054 (US)
(72) Inventor: KULKARNI, Sunil, Portland, Oregon 97229 (US)
(74) Representative: Rummler, Felix
(86) International application number: PCT/US2015/048777
(87) International publication number: WO 2016/048635

(56) References cited:
- KR-A- 20140 011 660
- US-A1- 2006 085 536
- US-A1- 2008 068 103
- US-A1- 2013 238 700
- US-A1- 2014 025 973
- US-A1- 2014 208 141

## Description

### FIELD

Embodiments of the invention are generally related to servicing sensor clients, and more particularly to variable interval timing to provide data to clients having different periodic fix requests.

### COPYRIGHT NOTICE/PERMISSION

Portions of the disclosure of this patent document may contain material that is subject to copyright protection. The copyright owner has no objection to the reproduction by anyone of the patent document or the patent disclosure as it appears in the Patent and Trademark Office patent file or records, but otherwise reserves all copyright rights whatsoever. The copyright notice applies to all data as described below, and in the accompanying drawings hereto, as well as to any software described below: Copyright © 2014, Intel Corporation, All Rights Reserved.

### BACKGROUND

Multiple different types of devices can request single fix or periodic fix from location based cores such as WiFi, GNSS (global navigation satellite system), or others, or other sensor services. A single fix request generates a single request for location. A periodic fix request provides a standing request for a registered location service client to receive location information periodically. Multiple clients can be connected to a location framework at any time. However, the multiple clients can each request different periodic fixes, requesting location service at different minimum intervals. Sending information too frequently can increase the load on the location service framework and consume additional bandwidth and additional power. Sending information too infrequently would violate the periodic fix request registered for the clients. However, current location frameworks do not manage different periodic fix intervals efficiently. When multiple clients request periodic fixes with different time intervals, the sequence of notifications cannot reasonably be programmed into the sensor or service framework. Additionally, changing the system by connecting a different group of clients with different requirements (i.e., different intervals) could result in totally different sequence of responses from the sensor or framework. Traditional framework implementations send data to all clients at the interval associated with the client that requests the smallest interval. Thus, traditional framework implementations handle different periodic fix requests inefficiently. Document US 2006/085536 A is directed to a system and method for sharing data polling and buffering for multiple requesters.

### BRIEF DESCRIPTION OF THE DRAWINGS

The following description includes discussion of figures having illustrations given by way of example of implementations of embodiments of the invention. The drawings should be understood by way of example, and not by way of limitation. As used herein, references to one or more "embodiments" are to be understood as describing a particular feature, structure, and/or characteristic included in at least one implementation of the invention. Thus, phrases such as "in one embodiment" or "in an alternate embodiment" appearing herein describe various embodiments and implementations of the invention, and do not necessarily all refer to the same embodiment. However, they are also not necessarily mutually exclusive.
**Figure 1** is a block diagram of an embodiment of a system with a hub connected to multiple clients having different periodic fix requests.
**Figure 2** is a block diagram of an embodiment of a system with a hub that includes a timing engine to manage different periodic fix requests for multiple clients.
**Figure 3** is a block diagram of an embodiment of a table of managing different periodic fix requests in accordance with a highest common factor of the intervals of the different periodic fixes.
**Figure 4** is a block diagram of an embodiment of a table of managing different periodic fix requests in accordance with a sliding window for clients having different periodic fixes.
**Figure 5** is a representation of an embodiment of pseudocode for managing different periodic fixes for multiple different clients.
**Figure 6** is a flow diagram of an embodiment of a process for managing different periodic fixes for multiple different clients.
**Figure 7** is a block diagram of an embodiment of a computing system in which managing different periodic fixes for multiple different clients can be implemented.
**Figure 8** is a block diagram of an embodiment of a mobile device in which managing different periodic fixes for multiple different clients can be implemented.

Descriptions of certain details and implementations follow, including a description of the figures, which may depict some or all of the embodiments described below, as well as discussing other potential embodiments or implementations of the inventive concepts presented herein.

### DETAILED DESCRIPTION

As described herein, a hub or other service framework can service data requests for various different clients having different periodic fix intervals. The hub detects a specified value on a timer, and adjusts a count associated with each client by the specified value. The adjustment can be either to increment or decrement, depending on the implementation. If the adjustment to any count causes the count associated with the client to reach the periodic fixed interval associated with the client, the hub notifies the client. For counts that have not reached the respective fixed periodic request interval, the hub iterates for the next specified value for the timer.

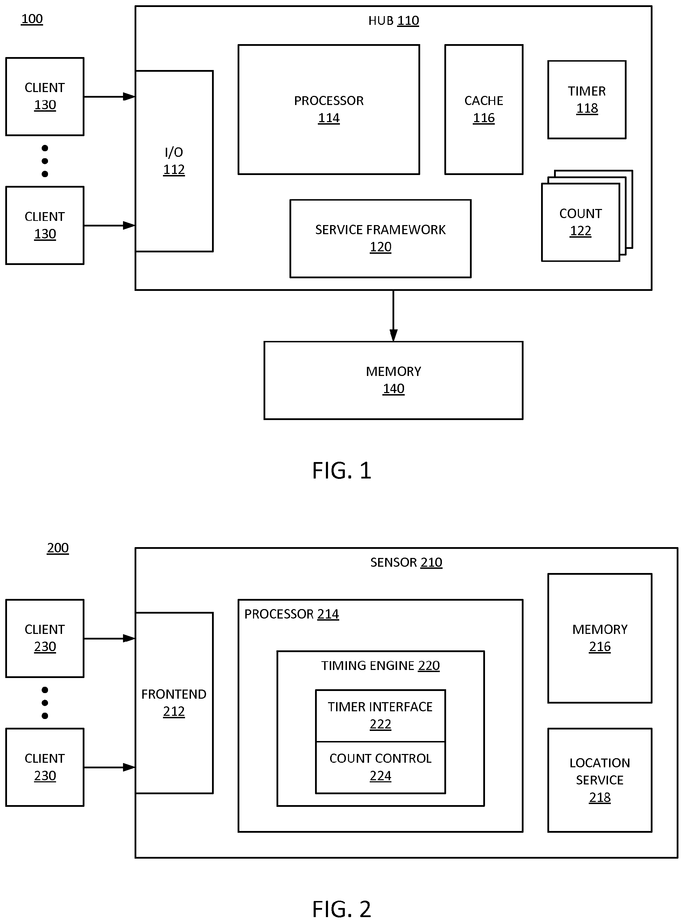

**Figure 1** is a block diagram of an embodiment of a system with sensor hub connected to multiple clients having different periodic fix requests. System 100 represents a data servicing system with a hub to provide data to multiple clients. System 100 includes hub 110, which represents a sensor hub or other hub that interfaces with multiple different clients 130. Hub 110 interfaces with clients 130 via I/O interface 112. I/O 112 can include wired and/or wireless interfaces. Typically for location services, the interface is wireless. Thus, I/O 112 can include hardware and software to exchange requests and data with clients 130.

Hub 110 includes processor 114, which represents a primary or main processor or microcontroller in system 100. Processor 114 controls the execution hub 110, and performs operations including calculations to manage the different periodic fix request intervals of clients 130. Processor 114 can be a single core or a multicore processor. In one embodiment, processor 114 is an embedded processor, and hub 110 is a platform in a sensor device. In one embodiment, processor 114 is or is part of a central processing unit (CPU) of a computing system. In one embodiment, hub 110 includes cache 116, which represents memory resources local to processor 114, in which processor 114 can temporarily store code and/or data for execution of operations. In one embodiment, system 100 can include external memory 140, which represents memory resources external to hub 110, such as system memory or main memory. Processor 114 can access memory 140 over a memory bus.

In one embodiment, hub 110 is a sensor hub or a sensor. The sensor provides data services to multiple registered clients 130. The sensor can provide data such as environmental data (location, motion, temperature, ambient light, or other data), biometric data (heart rate, pulse, skin metrics, fingerprint, optical scan information, or other biometric information), or other data detected about a condition and/or a user. Service framework 120 represents hardware and/or software to manage the interface to clients 130. Clients 130 register with service framework 120 to receive data services provided by hub 110. Service framework 120 includes one or more sensors that can generate information to send to clients 130.

In one embodiment, hub 110 includes one or more timers 118, which can be part of processor 114 or another part of hub 110. Timer 118 represents a counting mechanism in system 100 that keeps track of time (whether specific time such as second or minutes, or relative time such as a number of cycles). Timer 118 operates based on a number of clock cycles of a known frequency clock or oscillator. Hub 110 can set a specified period for timer 118. Typically timer 118 will count up from zero. In one embodiment, processor 114 can be configured with one or more interrupts or other indication mechanism to identify when timer 118 has counted a certain amount of time or a certain number of iterations. Processor 114 can set a specified period for indication.

In one embodiment, processor 114 manages multiple counts 122, at least one associated with each client 130. Count 122 can represent a count associated with tracking how much time has passed as indicated by timer 118 relative to a periodic fix interval for each client 130. Thus, for example, each client 130 can have an associated count, which processor 114 keeps to determine when to send data to the respective clients.

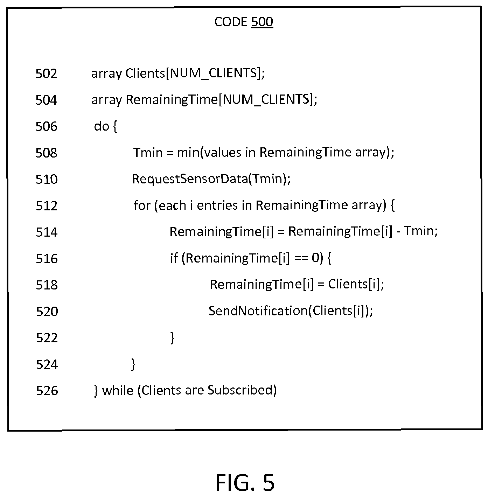

It will be understood that in general, system 100 via processor 114 and timer 118 can count up to the periodic fix interval for each client 130, or can count down from the periodic fix interval for each client 130 to zero. For counting up to a periodic fix interval, it will be understood that in addition to a count for each client, hub 110 will also maintain a threshold or an interval to compare to the count of the timer. From the perspective of generating a software program to be executed by processor 114 to manage the periodic fix requests, it may be simpler to count down from the periodic fix interval of each client 130 to zero. An example of pseudocode for such a program is provided below in Figure 5.

Hub 110 can set the interval for each client 130 based on the registering of the clients with service framework 120. In addition to handling the interval properly for each client, it will be appreciated that clients 130 can dynamically come in and out of system and hub 110 will still properly handle the intervals of the clients. Thus, a new client 130 with a different periodic fix interval can be added to system 100 without disruption in the operation, as long as the new client is registered with its interval. Similarly an existing client 130 can be removed from system 100 without disruption in the operation. In either case processor 114 can continue to service the requests in accordance with the requirements of each individual client 130.

**Figure 2** is a block diagram of an embodiment of a system with a sensor hub that includes a timing engine to manage different periodic fix requests for multiple clients. System 200 can be one example of system 100 of Figure 1. System 200 represents a sensor servicing system. System 200 includes multiple clients 230, which represent any type of computing devices or consumer devices that request data servicing, such as location services. System 200 includes sensor 210, which represents a computing device or sensor device that generates data and services requests for that data. Sensor 210 can be considered a hub in the sense that multiple clients 230 send requests to sensor 210. Clients 230 can register with sensor 210 to receive repeated notifications of the data provided by sensor 210.

In one embodiment, sensor 210 includes frontend 212. Frontend 212 represents hardware and software components that interface with clients 230. In one embodiment, frontend 212 includes hardware and firmware to operate wireless hardware to communicate wirelessly with clients 230. Frontend 212 can be implemented as integrated components in a circuit integrated with another circuit and/or as a discrete circuit. For example, in one embodiment, frontend 212 can be integrated onto a die or substrate on which processor 214 is disposed. In one embodiment, frontend 212 is a discrete circuit (e.g., with a separate substrate and/or PCB (printed circuit board) from processor 214). In one embodiment, frontend 212 can be implemented as a combination of integrated and discrete components.

Sensor 210 includes processor 214, which represents any type of microprocessor, embedded processor, controller, and/or other processing unit that can direct the execution of sensor 210. Processor 214 can execute an operating system (OS) such as a realtime OS as well as applications. The applications can be programs or processes that execute on a software environment controlled by the operating system. In one embodiment, processor 214 executes elements of timing engine 220. Timing engine 220 represents hardware and/or software components that enable sensor 210 to manage different periodic fix requests from multiple different clients 230.

Sensor 210 includes memory 216, which represents memory resources accessible to sensor 210. Memory 216 can include volatile and/or nonvolatile memory. Volatile memory refers to storage whose state (and therefore the data stored in the memory media) is indeterminate when power is interrupted to the memory device, and nonvolatile memory refers to storage that retains state when power is interrupted to the memory device. In one embodiment, sensor 210 includes location service 218, which represents one or more sensor units and/or other hardware and software to enable sensor 210 to generate location data for clients 230.

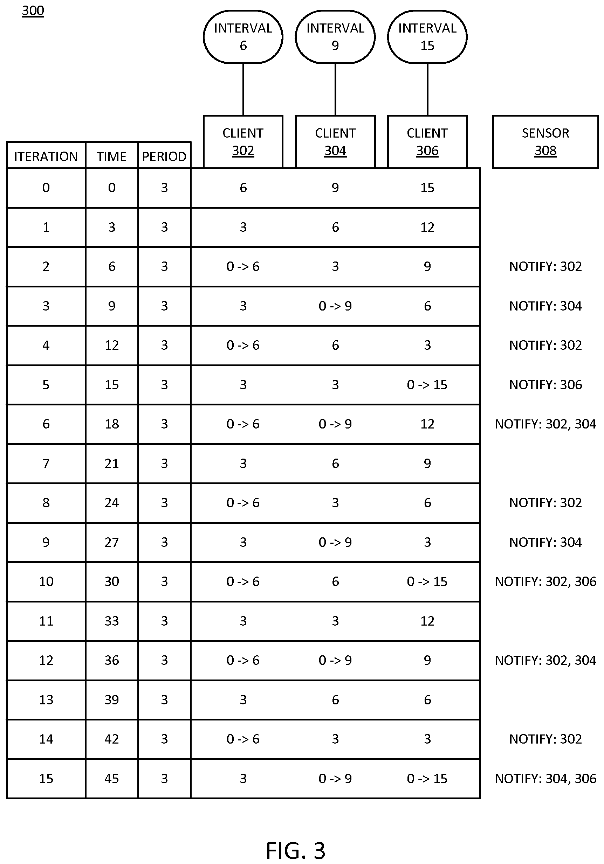

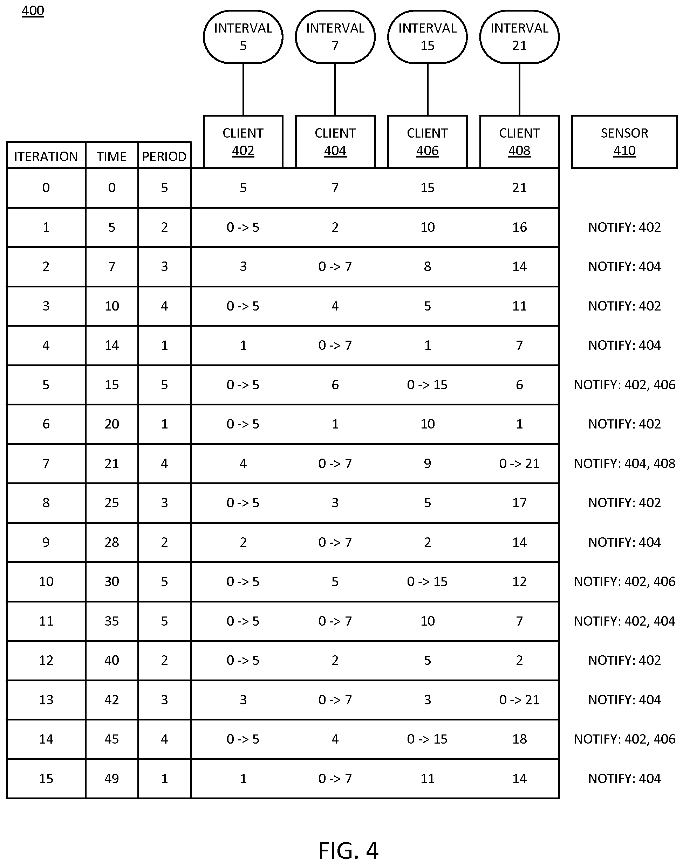

In one embodiment, timing engine 220 includes timer interface 222, which represents processing logic to enable sensor 210 to monitor a timer (not specifically illustrated in system 200). The timer can be initiated to a specified value, or initiated to count to a specified value via timer interface 222. Timer interface 222 enables processor 214 to monitor the timer and detect when it has counted the specified amount of time. In one embodiment, timing engine 220 includes count control 224, which represents processing logic to enable sensor 210 to manage counts for clients 230. Count control 224 can generate and keep a count for each different client 230, and determine based on the count and based on the iterations of the timer whether it is time for sensor 210 to notify a specific client 230 or send data to the client. Count control 224 represents processing logic that enables sensor 210 to manage the different request intervals for the different clients 230. Figures 3 and 4 and their descriptions provide examples of different ways in which count control 224 can operate.

**Figure 3** is a block diagram of an embodiment of a table of managing different periodic fix requests in accordance with a highest common factor of the intervals of the different periodic fixes. Table 300 illustrates one example embodiment of managing different intervals for periodic fix requests for multiple clients. Table 300 can illustrate an example for any embodiment of a system described herein, such as system 100 of Figure 1 or system 200 of Figure 2. For purposes of illustration, consider client 302 having an interval of 6, client 304 having an interval of 9, and client 306 having an interval of 15. While not specifically labeled, the 6, 9, and 15 could be seconds or any other unit of timing. It will be understood that 6, 9, and 15 share a highest common factor of 3. These examples were selected to illustrate how a highest common factor can be used. In certain implementations, the highest common factor is 1, and so each period of iteration will be 1 unit of time (such as 1 second).

In one embodiment as illustrated, the sensor system decrements a count for each client 302, 304, 306 from their associated intervals (6, 9, and 15, respectively) to zero. Alternatively, the system could increment the counts from zero to the associated interval, which could involve more complex programming, but could operate in a similar manner. As another alternative, the system could increment or decrement to a value of the interval plus or minus an offset. Whether from or to zero, or from or to an offset (normalization to zero), the system monitors a count for each client to determine when the interval for each client has elapsed. For purposes of illustration, 16 iterations are illustrated. In a real system, the system could continue indefinitely for as long as any one or more of the clients is registered with sensor 308.

Consider a starting point for the system, where at iteration 0, the time on the timer (which can be an absolute time, or a relative time) is 0. The period is illustrated as 3 for all iterations. The period for table 300 is the highest common factor for the intervals of clients 302, 304, and 306. At iteration 0, the count for client 302 is 6, the count for client 304 is 9, and the count for client 306 is 15. In one embodiment, each count is decremented by 3 for the next iteration, or when the processor determines that the timer has reached the specified period of 3. Thus, the processor decrements each count by the amount the timer incremented, or the specified period. At iteration 1, the counts are then 3, 6, and 12 for clients 302, 304, and 306, respectively. Thus, the respective interval has not been reached for any of the clients at iteration 1.

The timer counts for another 3 to a time of 6, and the processor decrements each client count by 3. Once the counts are decremented again, the count for client 302 comes to zero, while the counts for clients 304 and 306 become 3 and 9, respectively. The processor determines that the count for client 302 indicates that the count for the client has reached the interval for client 302. In one embodiment, the processor resets the count for client 302 to 6 to allow the count to be decremented again to the client interval. In one embodiment, sensor 308 generates a notification for client 302. The notification can be the servicing by the sensor to send data to the client.

It will be observed from table 300 that the sensor processor continues to decrement and reset client counts for the clients. When the count for a client indicates that an interval amount of time has passed, sensor 308 provides a notification to the client(s) whose intervals have been reached. For example, the interval for client 302 is reached at iterations 2, 4, 6, 8, 10, 12, and 14. The interval for client 304 is reached at iterations 3, 6, 9, 12, and 15. The interval for client 306 is reached at iterations 5, 10, and 15.

**Figure 4** is a block diagram of an embodiment of a table of managing different periodic fix requests in accordance with a sliding window for clients having different periodic fixes. Table 400 illustrates one example embodiment of managing different intervals for periodic fix requests for multiple clients with a sliding window. Table 400 can illustrate an example for any embodiment of a system described herein, such as system 100 of Figure 1 or system 200 of Figure 2. The algorithm executed by sensor 410 to produce the illustration of table 400 allows great simplicity even for complex interval patterns in a sensor system. Even assuming that clients register and then exit the system, the processor for sensor 410 can manage the intervals of all the clients.

For purposes of illustration, consider client 402 having an interval of 5, client 404 having an interval of 7, client 406 having an interval of 15, and client 408 having an interval of 21. It will be observed that there is no common factor higher than 1 for the associated intervals. However, with a sliding window, the sensor processor does not use a highest common factor. While not specifically labeled, the intervals can be expressed in any unit of timing, such as seconds.

In one embodiment, the processor makes a list of all clients 402, 404, 406, and 408 with their associated intervals. In one embodiment, the processor determines a count that is closest to the intervals, among all counts. Such a time can be referred to as a period for the sliding window, or a Tmin (minimum time). For example, at iteration 0, client 402 has an associated count of 5 based on its interval of 5, client 404 has an associated count of 7 based on its interval, client 406 has an associated count of 15 based on its interval, and client 408 has an associated count of 21 based on its interval. In one embodiment as illustrated, the sensor system decrements a count for each client from their associated intervals to zero. Alternatively, the system could increment the counts from zero to the associated interval, which could involve more complex programming, but could operate in a similar manner. As another alternative, the system could increment or decrement to a value of the interval plus or minus an offset. Whether from or to zero, or from or to an offset (normalization to zero), the system monitors a count for each client to determine when the interval for each client has elapsed. For purposes of illustration, 16 iterations are illustrated. In a real system, the system could continue indefinitely for as long as any one or more of the clients is registered with sensor 410.

The processor determines at iteration 0 that the count closest to a respective interval is the count for client 402, because the count for client 402 has a difference of 5 from its interval. Thus, the period for iteration 0 is 5. After a timer counts the specified period of 5, the processor recalculates the counts for each client. At iteration 1, the processor decrements the count for client 402 by 5, which becomes 0. The counts for clients 404, 406, and 408 become, respectively, 2, 10, and 16. In one embodiment, because the count for client 402 becomes zero, the processor resets its count to 5. Sensor 410 notifies client 402. The processor determines that the count closest to reaching its interval or predetermined threshold (or Tmin) is 2. Thus, the period for iteration 1 is set to 2.

The processor detects when the timer has counted to 2. It will be observed that the time for iteration 2 is 7, which is the sum of the previous two specified periods, which is when the processor detects the timer. At iteration 2, the processor decrements each client count by the previous period, or the amount that the timer counted. Thus, the counts for clients 402, 404, 406, and 408 become, respectively, 3, 0, 8, and 14. In one embodiment, the processor resets the count for client 404 to 7 and notifies client 404. The processor determines that the count closest to its respective interval is the count for client 402, at 3. Thus, the processor sets the period to 3.

After the timer has counted 3 (from time=7 to time=10), the processor detects the change and recalculates the counts for the clients. At iteration 3, the count for client 402 becomes 0, and the counts for clients 404, 406, and 408 become, respectively, 4, 5, and 11. Sensor 410 notifies client 402. In one embodiment, the processor resets the period to 4 and resets the count of client 402 to 5. At iteration 4, the count for client 404 reaches 0, and the lowest count or the count closest to the respective intervals is both the count for client 402 and for client 406, both at 1. In one embodiment, the processor sets the period to 1, and initiates the timer to count again. At iteration 5, the counts for both clients 402 and 406 reach the respective intervals, and sensor 410 can notify both clients.

The operation of the sensor system continues in similar fashion in accordance with the other details in table 400. It will be observed that unlike a common factor approach or an approach that recalculates at every count of the timer, the sensor system allows the timer to count each iteration until a client count reaches a respective interval. Thus, the sensor system only recalculates when there will be a client to notify. The specified period for each iteration can be the same or different than the iteration previous to it. The specified period will not be higher than the lowest interval (5 for table 400), but can be any value between 1 and the lowest interval.

**Figure 5** is a representation of an embodiment of pseudocode for managing clients having different periodic fixes. Code 500 represents logic for an algorithm to manage different period fix intervals with a sliding window. Code 500 can be one example of logic executed by system 100 of Figure 1 or system 200 of Figure 2. Table 400 of Figure 4 can represent an example of the operations resulting from executed code 500. Code 500 is a pseudocode representation, and could thus be implemented in software in any computer code language, and/or could be implemented in hardware by dedicated logic. In one embodiment, a programmable logic array can be programmed to execute code 500.

In one embodiment, the flow of code 500 is as follows. At line 502, code 500 creates an array or a listing of all clients, where the variable NUM_CLIENTS is understood as the number of registered clients. In one embodiment, other logic not shown in code 500 can be responsible for adding or removing clients and updating the number of clients variable. In one embodiment, the array could be an array of structures with information about each client. For purposes of example in code 500, the Clients array will be understood as indicating an interval time for each client. At line 504, the code creates an array or list of remaining time for each client. The remaining time list can be referred to as a client count for each client. Thus, the array presupposes an implementation where the counts will be decremented by an amount counted up by a timer, and so indicates an amount of time remaining until the client interval is reached. While not specifically illustrated, the system includes information to identify the initial count or the client interval for each client.

At line 506 the code enters a loop to manage the periodic fix intervals for the various clients. At line 526 it will be observed that the loop can continue indefinitely while the clients are subscribed with the sensor system. At line 508, in one embodiment, the code computes a value Tmin, equal to a minimum value of all values in the Remaining Time array, which indicates the counts for the various clients. In one embodiment, code 500 will have a timer count for the period of Tmin. At line 510, code 500 illustrates a method call to request sensor data in a time of Tmin. It will be understood that RequestSensorData() represents a method call to obtain sensor data in the period of time indicated in the argument. Thus, the sensor system will have the current sensor information when the specified period of Tmin passes.

At line 512, in one embodiment, code 500 enters a loop to update the values or the counts in the Remaining Time array. In one embodiment, for each of i entries in the Remaining Time array, the code can perform the following. At line 514 the code decrements the count for each client by the current period, Tmin. At line 516 the code determines if any of the client counts (entries in the Remaining Time array) are equal to zero. It will be understood from the discussions above that decrementing a count until zero is one way to determine if the interval for a client has elapsed. If the interval for a client has elapsed, in one embodiment, the code resets the remaining time to the interval for the specified client.

Thus, at line 518, the code can set the entry in the Remaining Time array to the interval time specified for the corresponding client in the Clients array. At line 520, code 500 can execute a process SendNotification(), which sends a notification or sends data to a client indicated in the argument of the process. It will be understood that the argument at line 520 is indicated as (Clients[i]), which for purpose of line 520 refers to the identification of the client itself, instead of the interval associated with the client as at line 518. At line 522, the loop started at line 516 ends. At line 524, the for loop started at line 512 ends. Thus, code 500 will iterate through the logic again to reset the specified period and adjust the count for each client.

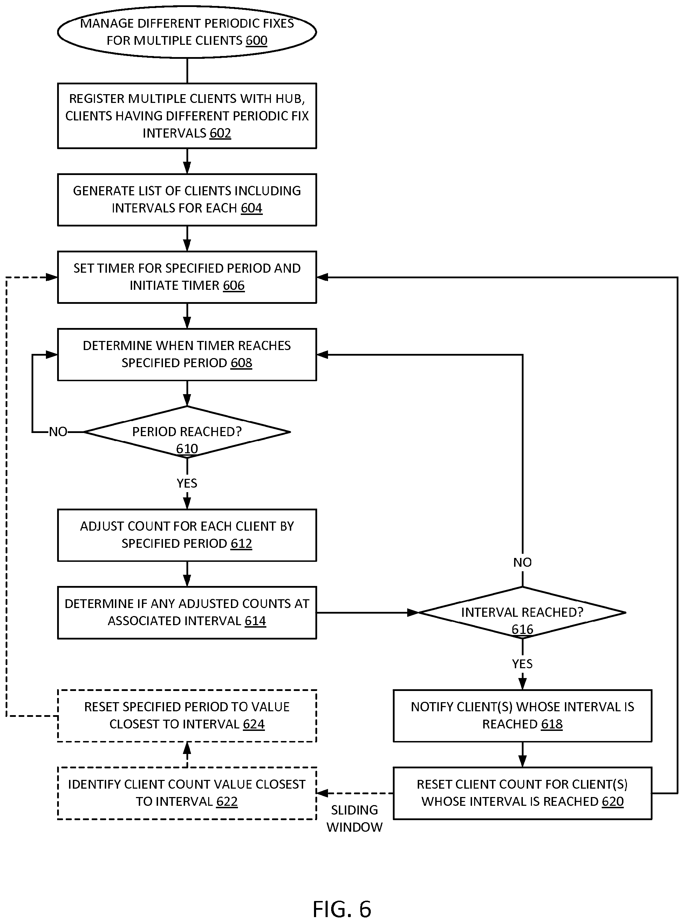

**Figure 6** is a flow diagram of an embodiment of a process for managing clients having different periodic fixes. Process 600 is intended to generally show both a process that uses a sliding window, as well as a process that does not use a sliding window. In one embodiment, multiple clients having different period fix intervals register with a sensor system, 602. It will be understood that multiple clients can have the same periodic fix interval and the operations described will still be valid. In one embodiment, processing logic or a processor for the sensor system generates a list of clients including data indicating the intervals for each client, 604. Reference below to a sensor system performing various operations can refer to a processor or other processing logic of the sensor system performing the operations described. The descriptions refer to the sensor system performing the operations for simplicity and not by way of limitation on what component or element performs the operations.

In one embodiment, the sensor system sets a timer for a specified period and initiates the timer, 606. The timer counts or iterates until the specified period is reached. The sensor system determines that the timer has reached the specified period, 608. If the period is not reached, 610 NO branch, the timer can continue to count, 608. If the period has been reached, 610 YES branch, the sensor system adjusts the count for each client by the specified period, 612. In one embodiment, the sensor system decrements each count by an amount equal to the specified period. In one embodiment, the sensor system can increment each count by the specified period, depending on the implementation.

In one embodiment, the sensor system determines if any adjusted counts has reached the interval for the associated client, 614. Again, if the sensor system sets each count to the associated interval and then decrements, the count reaches the interval when the count becomes zero. For any client count that the interval is not reached, 616 NO branch, the sensor system will continue to have the timer count and to adjust the client counts accordingly. For any client whose interval has been reached, 616 YES branch, the sensor system notifies the associated client(s), 618. In one embodiment, the sensor system resets the client count for each client whose interval is reached, 620. Alternatively, the count for each client can simply be monitored for each time the interval is reached.

In one embodiment, the sensor system manages the client counts with a sliding window. If a sliding window is not used, the sensor system can return to resetting the timer for a next iteration after adjusting the count for each of the clients, 606. With the sliding window, in one embodiment, the sensor system can identify the client count that is closest to the interval associated with the respective client, 622. The sensor system resets the specified period to a value equal to the value of the count determined to be closest to the respective interval, 624. After resetting the specified period to the value closest to the interval, the sensor system can reset the timer equal to the specified period, 606. The sensor system can continue to iterate through the specified period for the timer while the clients remain registered.

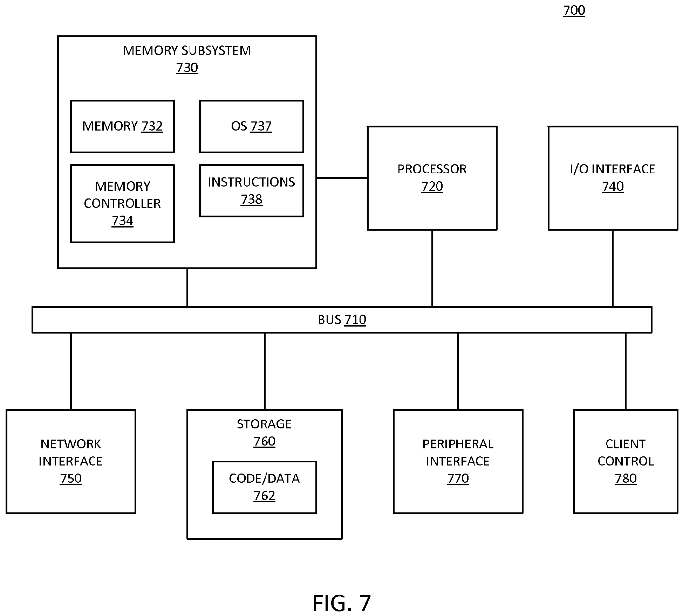

**Figure 7** is a block diagram of an embodiment of a computing system in which managing clients with different periodic fixes can be implemented. System 700 represents a computing device in accordance with any embodiment described herein, and can be a laptop computer, a desktop computer, a server, a gaming or entertainment control system, a scanner, copier, printer, routing or switching device, a sensor device, a request servicing device, or other electronic device. System 700 includes processor 720, which provides processing, operation management, and execution of instructions for system 700. Processor 720 can include any type of microprocessor, central processing unit (CPU), processing core, or other processing hardware to provide processing for system 700. Processor 720 controls the overall operation of system 700, and can be or include, one or more programmable general-purpose or special-purpose microprocessors, digital signal processors (DSPs), programmable controllers, application specific integrated circuits (ASICs), programmable logic devices (PLDs), or the like, or a combination of such devices.

Memory subsystem 730 represents the main memory of system 700, and provides temporary storage for code to be executed by processor 720, or data values to be used in executing a routine. Memory subsystem 730 can include one or more memory devices such as read-only memory (ROM), flash memory, one or more varieties of random access memory (RAM), or other memory devices, or a combination of such devices. Memory subsystem 730 stores and hosts, among other things, operating system (OS) 736 to provide a software platform for execution of instructions in system 700. Additionally, other instructions 738 are stored and executed from memory subsystem 730 to provide the logic and the processing of system 700. OS 736 and instructions 738 are executed by processor 720. Memory subsystem 730 includes memory device 732 where it stores data, instructions, programs, or other items. In one embodiment, memory subsystem includes memory controller 734, which is a memory controller to generate and issue commands to memory device 732. It will be understood that memory controller 734 could be a physical part of processor 720.

Processor 720 and memory subsystem 730 are coupled to bus/bus system 710. Bus 710 is an abstraction that represents any one or more separate physical buses, communication lines/interfaces, and/or point-to-point connections, connected by appropriate bridges, adapters, and/or controllers. Therefore, bus 710 can include, for example, one or more of a system bus, a Peripheral Component Interconnect (PCI) bus, a HyperTransport or industry standard architecture (ISA) bus, a small computer system interface (SCSI) bus, a universal serial bus (USB), or an Institute of Electrical and Electronics Engineers (IEEE) standard 1394 bus (commonly referred to as "Firewire"). The buses of bus 710 can also correspond to interfaces in network interface 750.

System 700 also includes one or more input/output (I/O) interface(s) 740, network interface 750, one or more internal mass storage device(s) 760, and peripheral interface 770 coupled to bus 710. I/O interface 740 can include one or more interface components through which a user interacts with system 700 (e.g., video, audio, and/or alphanumeric interfacing). In one embodiment, I/O interface 740 can include a high definition (HD) display that provides an output to a user. High definition can refer to a display having a pixel density of approximately 100 PPI (pixels per inch) or greater, and can include formats such as full HD (e.g., 1080p), retina displays, 4K (ultra high definition or UHD), or others. High definition can also refer to projected displays (e.g., head-mounted displays) that have comparable visual quality to pixel displays. Network interface 750 provides system 700 the ability to communicate with remote devices (e.g., servers, other computing devices) over one or more networks. Network interface 750 can include an Ethernet adapter, wireless interconnection components, USB (universal serial bus), or other wired or wireless standards-based or proprietary interfaces.

Storage 760 can be or include any conventional medium for storing large amounts of data in a nonvolatile manner, such as one or more magnetic, solid state, or optical based disks, or a combination. Storage 760 holds code or instructions and data 762 in a persistent state (i.e., the value is retained despite interruption of power to system 700). Storage 760 can be generically considered to be a "memory," although memory 730 is the executing or operating memory to provide instructions to processor 720. Whereas storage 760 is nonvolatile, memory 730 can include volatile memory (i.e., the value or state of the data is indeterminate if power is interrupted to system 700).

Peripheral interface 770 can include any hardware interface not specifically mentioned above. Peripherals refer generally to devices that connect dependently to system 700. A dependent connection is one where system 700 provides the software and/or hardware platform on which operation executes, and with which a user interacts.

In one embodiment, system 700 includes client control 780, which enables system 700 to service multiple clients having different periodic fixes in accordance with any embodiment described herein. In one embodiment, client control 780 manages client counts associated with each of the clients. Client control can manage each of the accounts to determine when the interval has elapsed for each of the clients. When the interval for a client is reached, system 700 can notify the client.

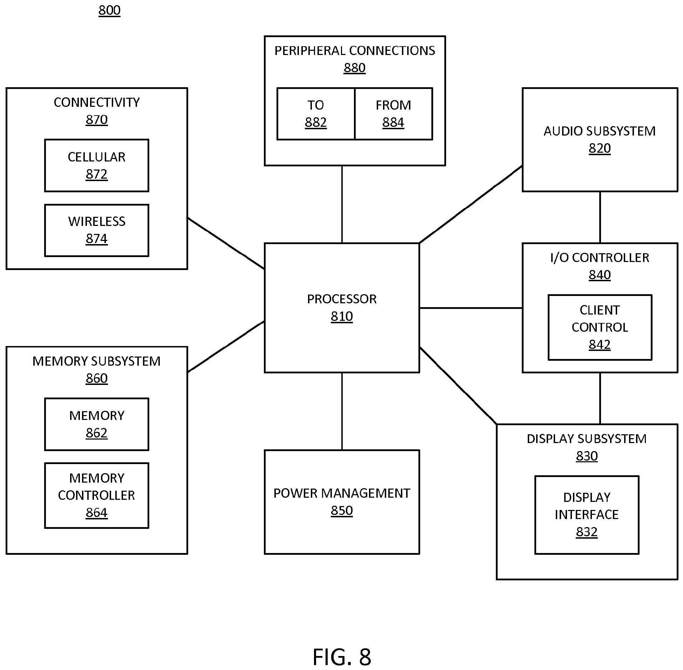

**Figure 8** is a block diagram of an embodiment of a mobile device in which managing clients with different periodic fixes can be implemented. Device 800 represents a mobile computing device, such as a computing tablet, a mobile phone or smartphone, a wireless-enabled e-reader, wearable computing device, or other mobile device. It will be understood that certain of the components are shown generally, and not all components of such a device are shown in device 800.

Device 800 includes processor 810, which performs the primary processing operations of device 800. Processor 810 can include one or more physical devices, such as microprocessors, application processors, microcontrollers, programmable logic devices, or other processing means. The processing operations performed by processor 810 include the execution of an operating platform or operating system on which applications and/or device functions are executed. The processing operations include operations related to I/O (input/output) with a human user or with other devices, operations related to power management, and/or operations related to connecting device 800 to another device. The processing operations can also include operations related to audio I/O and/or display I/O.

In one embodiment, device 800 includes audio subsystem 820, which represents hardware (e.g., audio hardware and audio circuits) and software (e.g., drivers, codecs) components associated with providing audio functions to the computing device. Audio functions can include speaker and/or headphone output, as well as microphone input. Devices for such functions can be integrated into device 800, or connected to device 800. In one embodiment, a user interacts with device 800 by providing audio commands that are received and processed by processor 810.

Display subsystem 830 represents hardware (e.g., display devices) and software (e.g., drivers) components that provide a visual and/or tactile display for a user to interact with the computing device. Display subsystem 830 includes display interface 832, which includes the particular screen or hardware device used to provide a display to a user. In one embodiment, display interface 832 includes logic separate from processor 810 to perform at least some processing related to the display. In one embodiment, display subsystem 830 includes a touchscreen device that provides both output and input to a user. In one embodiment, display subsystem 830 includes a high definition (HD) display that provides an output to a user. High definition can refer to a display having a pixel density of approximately 100 PPI (pixels per inch) or greater, and can include formats such as full HD (e.g., 1080p), retina displays, 4K (ultra high definition or UHD), or others.

I/O controller 840 represents hardware devices and software components related to interaction with a user. I/O controller 840 can operate to manage hardware that is part of audio subsystem 820 and/or display subsystem 830. Additionally, I/O controller 840 illustrates a connection point for additional devices that connect to device 800 through which a user might interact with the system. For example, devices that can be attached to device 800 might include microphone devices, speaker or stereo systems, video systems or other display device, keyboard or keypad devices, or other I/O devices for use with specific applications such as card readers or other devices.

As mentioned above, I/O controller 840 can interact with audio subsystem 820 and/or display subsystem 830. For example, input through a microphone or other audio device can provide input or commands for one or more applications or functions of device 800. Additionally, audio output can be provided instead of or in addition to display output. In another example, if display subsystem includes a touchscreen, the display device also acts as an input device, which can be at least partially managed by I/O controller 840. There can also be additional buttons or switches on device 800 to provide I/O functions managed by I/O controller 840.

In one embodiment, I/O controller 840 manages devices such as accelerometers, cameras, light sensors or other environmental sensors, gyroscopes, global positioning system (GPS), or other hardware that can be included in device 800. The input can be part of direct user interaction, as well as providing environmental input to the system to influence its operations (such as filtering for noise, adjusting displays for brightness detection, applying a flash for a camera, or other features). In one embodiment, device 800 includes power management 850 that manages battery power usage, charging of the battery, and features related to power saving operation.

Memory subsystem 860 includes memory device(s) 862 for storing information in device 800. Memory subsystem 860 can include nonvolatile (state does not change if power to the memory device is interrupted) and/or volatile (state is indeterminate if power to the memory device is interrupted) memory devices. Memory 860 can store application data, user data, music, photos, documents, or other data, as well as system data (whether long-term or temporary) related to the execution of the applications and functions of system 800. In one embodiment, memory subsystem 860 includes memory controller 864 (which could also be considered part of the control of system 800, and could potentially be considered part of processor 810). Memory controller 864 includes a scheduler to generate and issue commands to memory device 862.

Connectivity 870 includes hardware devices (e.g., wireless and/or wired connectors and communication hardware) and software components (e.g., drivers, protocol stacks) to enable device 800 to communicate with external devices. The external device could be separate devices, such as other computing devices, wireless access points or base stations, as well as peripherals such as headsets, printers, or other devices.

Connectivity 870 can include multiple different types of connectivity. To generalize, device 800 is illustrated with cellular connectivity 872 and wireless connectivity 874. Cellular connectivity 872 refers generally to cellular network connectivity provided by wireless carriers, such as provided via GSM (global system for mobile communications) or variations or derivatives, CDMA (code division multiple access) or variations or derivatives, TDM (time division multiplexing) or variations or derivatives, LTE (long term evolution - also referred to as "4G"), or other cellular service standards. Wireless connectivity 874 refers to wireless connectivity that is not cellular, and can include personal area networks (such as Bluetooth), local area networks (such as WiFi), and/or wide area networks (such as WiMax), or other wireless communication. Wireless communication refers to transfer of data through the use of modulated electromagnetic radiation through a non-solid medium. Wired communication occurs through a solid communication medium.

Peripheral connections 880 include hardware interfaces and connectors, as well as software components (e.g., drivers, protocol stacks) to make peripheral connections. It will be understood that device 800 could both be a peripheral device ("to" 882) to other computing devices, as well as have peripheral devices ("from" 884) connected to it. Device 800 commonly has a "docking" connector to connect to other computing devices for purposes such as managing (e.g., downloading and/or uploading, changing, synchronizing) content on device 800. Additionally, a docking connector can allow device 800 to connect to certain peripherals that allow device 800 to control content output, for example, to audiovisual or other systems.

In addition to a proprietary docking connector or other proprietary connection hardware, device 800 can make peripheral connections 880 via common or standards-based connectors. Common types can include a Universal Serial Bus (USB) connector (which can include any of a number of different hardware interfaces), DisplayPort including MiniDisplayPort (MDP), High Definition Multimedia Interface (HDMI), Firewire, or other type.

In one embodiment, system 800 includes client control 842, which enables system 800 to service multiple clients having different periodic fixes in accordance with any embodiment described herein. In one embodiment, client control 842 manages client counts associated with each of the clients. Client control can manage each of the accounts to determine when the interval has elapsed for each of the clients. When the interval for a client is reached, system 800 can notify the client.

In one aspect, a method for managing periodic fix requests including: detecting that a timer has incremented a specified period; adjusting by the specified period a count associated with each of multiple clients, the multiple clients having different fixed periodic request intervals with a sensor hub processor that provides data to each of the clients at the respective different fixed periodic request intervals; determining if the adjusting causes any count to reach the respective fixed periodic request interval for the associated client; and notifying any client whose count has reached the fixed periodic request interval.

In one embodiment, the specified period comprises a highest common factor of all different fixed periodic request intervals. In one embodiment, further comprising recalculating the specified period for a subsequent iteration. In one embodiment, recalculating the specified period further comprises: determining for all counts that have not reached the respective fixed periodic request interval, a count with a smallest difference to its respective fixed periodic request interval; and resetting the specified period to the determined smallest difference. In one embodiment, adjusting the count by the specified period comprises decrementing the count, and wherein determining if the adjusting causes any count to reach the respective fixed periodic request interval comprises determining if the decrementing causes any count to reach zero. In one embodiment, further comprising: determining a lowest value count for all counts that have not reached zero; and resetting the specified period to the determined lowest value count. In one embodiment, notifying the client comprises providing location information to the client. In one embodiment, further comprising: resetting the count for all clients whose count has reached the fixed periodic request interval.

In one aspect, a frontend interface circuit for managing periodic fix requests including: hardware I/O (input/output) connectors to couple to multiple clients, the multiple clients having different fixed periodic request intervals; a timer; a processor to provide data to each of the clients at the respective different fixed periodic request intervals, the processor to detect when the timer has incremented a specified period, decrement a count associated with each of the multiple clients by the specified period, and notify any client whose count has reached zero.

In one embodiment, the specified period comprises a highest common factor of all different fixed periodic request intervals. In one embodiment, further comprising the processor to recalculate the specified period for a subsequent iteration. In one embodiment, the processor is to recalculate the specified period including determining for all counts that have not reached the respective fixed periodic request interval, a count with a smallest difference to its respective fixed periodic request interval; and resetting the specified period to the determined smallest difference. In one embodiment, further comprising the processor to determine a lowest value count for all counts that have not reached zero, and reset the specified period to the determined lowest value count. In one embodiment, the processor is to provide location information to the clients. In one embodiment, further comprising the processor to reset the count for all clients whose count has reached zero.

In one aspect, an electronic device that manages multiple different periodic fix requests including: a frontend interface circuit including hardware I/O (input/output) connectors to couple to multiple clients, the multiple clients having different fixed periodic request intervals; a timer; a sensor processor to provide data to each of the clients at the respective different fixed periodic request intervals, the sensor processor to detect when the timer has incremented a specified period, adjust a count associated with each of the multiple clients by the specified period, determine if the adjusting causes any count to reach a respective fixed periodic request interval for the associated client, and notify any client whose count has reached the respective fixed periodic request interval; and a touchscreen display coupled to generate a display based on data accessed from the frontend interface circuit.

In one embodiment, the specified period comprises a highest common factor of all different fixed periodic request intervals. In one embodiment, the sensor processor is further to compute the specified period for each iteration. In one embodiment, the sensor processor is to compute the specified period including the sensor processor to determine for all counts that have not reached the respective fixed periodic request interval a count with a smallest difference to its respective fixed periodic request interval, and reset the specified period to the determined smallest difference. In one embodiment, the sensor processor is to decrement each count by the specified period and determine if the decrementing causes any count to reach zero. In one embodiment, the sensor processor is to provide location information to the clients. In one embodiment, further comprising the sensor processor to reset the count for all clients whose count has reached zero.

In one aspect, an article of manufacture comprising a computer readable storage medium having content stored thereon, which when executed performs operations for managing periodic fix requests, including: detecting that a timer has incremented a specified period; adjusting by the specified period a count associated with each of multiple clients, the multiple clients having different fixed periodic request intervals with a sensor hub processor that provides data to each of the clients at the respective different fixed periodic request intervals; determining if the adjusting causes any count to reach the respective fixed periodic request interval for the associated client; and notifying any client whose count has reached the fixed periodic request interval.

In one embodiment, the specified period comprises a highest common factor of all different fixed periodic request intervals. In one embodiment, further comprising content for recalculating the specified period for a subsequent iteration. In one embodiment, the content for recalculating the specified period further comprises content for determining for all counts that have not reached the respective fixed periodic request interval, a count with a smallest difference to its respective fixed periodic request interval; and resetting the specified period to the determined smallest difference. In one embodiment, the content for adjusting the count by the specified period comprises content for decrementing the count, and wherein the content for determining if the adjusting causes any count to reach the respective fixed periodic request interval comprises content for determining if the decrementing causes any count to reach zero. In one embodiment, further comprising content for determining a lowest value count for all counts that have not reached zero; and resetting the specified period to the determined lowest value count. In one embodiment, the content for notifying the client comprises content for providing location information to the client. In one embodiment, further comprising content for resetting the count for all clients whose count has reached the fixed periodic request interval.

In one aspect, an apparatus for managing periodic fix requests includes: means for detecting that a timer has incremented a specified period; means for adjusting by the specified period a count associated with each of multiple clients, the multiple clients having different fixed periodic request intervals with a sensor hub processor that provides data to each of the clients at the respective different fixed periodic request intervals; means for determining if the adjusting causes any count to reach the respective fixed periodic request interval for the associated client; and means for notifying any client whose count has reached the fixed periodic request interval.

In one embodiment, the specified period comprises a highest common factor of all different fixed periodic request intervals. In one embodiment, further comprising means for recalculating the specified period for a subsequent iteration. In one embodiment, the means for recalculating the specified period further comprises means for determining for all counts that have not reached the respective fixed periodic request interval, a count with a smallest difference to its respective fixed periodic request interval; and resetting the specified period to the determined smallest difference. In one embodiment, the means for adjusting the count by the specified period comprises means for decrementing the count, and wherein the means for determining if the adjusting causes any count to reach the respective fixed periodic request interval comprises means for determining if the decrementing causes any count to reach zero. In one embodiment, further comprising means for determining a lowest value count for all counts that have not reached zero; and resetting the specified period to the determined lowest value count. In one embodiment, the means for notifying the client comprises means for providing location information to the client. In one embodiment, further comprising means for resetting the count for all clients whose count has reached the fixed periodic request interval.

Flow diagrams as illustrated herein provide examples of sequences of various process actions. The flow diagrams can indicate operations to be executed by a software or firmware routine, as well as physical operations. In one embodiment, a flow diagram can illustrate the state of a finite state machine (FSM), which can be implemented in hardware and/or software. Although shown in a particular sequence or order, unless otherwise specified, the order of the actions can be modified. Thus, the illustrated embodiments should be understood only as an example, and the process can be performed in a different order, and some actions can be performed in parallel. Additionally, one or more actions can be omitted in various embodiments; thus, not all actions are required in every embodiment. Other process flows are possible.

To the extent various operations or functions are described herein, they can be described or defined as software code, instructions, configuration, and/or data. The content can be directly executable ("object" or "executable" form), source code, or difference code ("delta" or "patch" code). The software content of the embodiments described herein can be provided via an article of manufacture with the content stored thereon, or via a method of operating a communication interface to send data via the communication interface. A machine readable storage medium can cause a machine to perform the functions or operations described, and includes any mechanism that stores information in a form accessible by a machine (e.g., computing device, electronic system, etc.), such as recordable/non-recordable media (e.g., read only memory (ROM), random access memory (RAM), magnetic disk storage media, optical storage media, flash memory devices, etc.). A communication interface includes any mechanism that interfaces to any of a hardwired, wireless, optical, etc., medium to communicate to another device, such as a memory bus interface, a processor bus interface, an Internet connection, a disk controller, etc. The communication interface can be configured by providing configuration parameters and/or sending signals to prepare the communication interface to provide a data signal describing the software content. The communication interface can be accessed via one or more commands or signals sent to the communication interface.

Various components described herein can be a means for performing the operations or functions described. Each component described herein includes software, hardware, or a combination of these. The components can be implemented as software modules, hardware modules, special-purpose hardware (e.g., application specific hardware, application specific integrated circuits (ASICs), digital signal processors (DSPs), etc.), embedded controllers, hardwired circuitry, etc.

Besides what is described herein, various modifications can be made to the disclosed embodiments and implementations of the invention without departing from their scope. Therefore, the illustrations and examples herein should be construed in an illustrative, and not a restrictive sense. The scope of the invention should be measured solely by reference to the claims that follow.

## Claims

1. A method for managing requests from location service clients, comprising:
determining, for each of multiple clients (130), a fixed period request interval at which a sensor hub (110) is to transmit data to a client (130), wherein the multiple clients (130) have different fixed period request intervals;
tracking a count (122) associated with each of the multiple clients (130), wherein the count associated with a given client (130) is based on the fixed period request interval of the given client (130);
detecting that a timer (118) has counted a specified period of time at a first iteration;
adjusting the count associated with each of the multiple clients (130) by the specified period;
determining if the adjusting causes the count for one or more of the multiple clients (130) to reach a predetermined value;
transmitting data to any client (130) whose count has reached the predetermined value; and
recalculating the specified period for a subsequent iteration, by:
determining, for all counts that have not reached the predetermined value, a count with a smallest difference to its predetermined value; and
resetting the specified period to the determined smallest difference.

2. The method of claim 1, wherein adjusting the count by the specified period comprises decrementing the count, and wherein determining if the adjusting causes any count to reach the predetermined value comprises determining if the decrementing causes any count to reach zero.

3. The method of claim 2, further comprising:
determining a lowest value count for all counts that have not reached zero; and
resetting the specified period to the determined lowest value count.

4. The method of any preceding claim, wherein notifying the client (130) comprises providing location information to the client (130).

5. The method of any preceding claim, further comprising:
resetting the count for all clients (130) whose count has reached the predetermined value.

6. A computer readable storage medium having program code means for performing all the steps of any one of claims 1 to 5.

7. An apparatus for managing requests from location service clients, comprising means for performing operations to execute a method in accordance with any of claims 1 to 5.

## Patentansprüche

1. Verfahren zum Verwalten von Anfragen von Standortdienste-Clients, umfassend:
Bestimmen, für jeden von mehreren Clients (130), eines Anforderungsintervalls fester Dauer, in dem ein Sensorknoten (110) Daten an einen Client (130) übertragen soll, wobei die mehreren Clients (130) Anforderungsintervalle mit verschiedener fester Dauer haben;
Verfolgen einer Zählung (122), die mit jedem der mehreren Clients (130) verknüpft ist, wobei die mit einem gegebenen Client (130) verknüpfte Zählung auf dem Anforderungsintervall fester Dauer des gegebenen Clients (130) basiert;
Erkennen, dass ein Zeitgeber (118) bei einer ersten Iteration eine bestimmte Zeitdauer gezählt hat;
Anpassen der Zählung, die mit jedem der mehreren Clients (130) verknüpft ist, um die angegebene Dauer;
Bestimmen, ob die Anpassung bewirkt, dass die Zählung für einen oder mehrere der mehreren Clients (130) einen vorbestimmten Wert erreicht;
Übertragen von Daten an jeden Client (130), dessen Zählung den vorbestimmten Wert erreicht hat; und
Neuberechnen der angegebenen Dauer für eine nachfolgende Iteration durch:
Bestimmen, für alle Zählungen, die den vorgegebenen Wert nicht erreicht haben, einer Zählung mit einer kleinsten Differenz zu ihrem vorgegebenen Wert; und
Zurücksetzen der angegebenen Dauer auf die bestimmte kleinste Differenz.

2. Verfahren nach Anspruch 1, wobei das Anpassen der Zählung um die angegebene Dauer umfasst, die Zählung zu verringern, und wobei das Bestimmen, ob das Anpassen bewirkt, dass eine Zählung den vorbestimmten Wert erreicht, umfasst zu bestimmen, ob das Verringern bewirkt, dass eine Zählung Null erreicht.

3. Verfahren nach Anspruch 2, ferner umfassend:
Bestimmen einer Zählung mit dem niedrigsten Wert für alle Zählungen, die nicht Null erreicht haben; und
Zurücksetzen der angegebenen Dauer auf den bestimmten niedrigsten Wert.

4. Verfahren nach einem der vorstehenden Ansprüche, wobei das Benachrichtigen des Clients (130) umfasst, Standortinformationen an den Client (130) bereitzustellen.

5. Verfahren nach einem der vorstehenden Ansprüche, ferner umfassend:
Zurücksetzen der Zählung für alle Clients (130), deren Zählung den vorgegebenen Wert erreicht hat.

6. Computerlesbares Speichermedium mit Programmcode-Mitteln zum Durchführen aller Schritte eines der Ansprüche 1 bis 5.

7. Einrichtung zum Verwalten von Anforderungen von Standortdienste-Clients mit Mitteln zum Durchführen von Operationen, um ein Verfahren gemäß einem der Ansprüche 1 bis 5 auszuführen.

## Revendications

1. Procédé de gestion de requêtes en provenance de clients d'un service de localisation, comprenant :
la détermination, pour chacun des multiples clients (130), d'un intervalle de requête périodique fixe auquel un centre de capteurs (110) doit transmettre des données à un client (130), les multiples clients (130) ayant différents intervalles de requête de période fixe ;
le suivi d'un compte (122) associé à chacun des multiples clients (130), le compte associé à un client donné (130) étant basé sur l'intervalle de requête de période fixe du client donné (130) ;
la détection qu'une minuterie (118) a compté une période de temps spécifiée à une première itération ;
l'ajustement du compte associé à chacun des multiples clients (130) par la période spécifiée ;
la détermination que l'ajustement amène ou non le compte pour un ou plusieurs des multiples clients (130) à atteindre une valeur prédéterminée ;
la transmission de données à n'importe quel client (130) dont le compte atteint la valeur prédéterminée ; et
le calcul à nouveau de la période spécifiée pour une itération suivante, en :
déterminant, pour tous les comptes qui n'ont pas atteint la valeur prédéterminée, un compte présentant la plus petite différence par rapport à sa valeur prédéterminée ; et
remettant la période spécifiée à la plus petite différence déterminée.

2. Procédé selon la revendication 1, dans lequel l'ajustement du compte par la période spécifiée comprend la décrémentation du compte, et dans lequel la détermination que l'ajustement amène un compte quelconque à atteindre ou non la valeur prédéterminée comprend la détermination que la décrémentation amène un compte quelconque à atteindre ou non zéro.

3. Procédé selon la revendication 2, comprenant en outre :
la détermination d'un compte de la plus basse valeur parmi tous les comptes qui n'ont pas atteint zéro ; et
la remise de la période spécifiée au compte de la plus basse valeur déterminé.

4. Procédé selon n'importe quelle revendication précédente, dans lequel la notification du client (130) comprend la fourniture d'informations de position au client (130).

5. Procédé selon n'importe quelle revendication précédente, comprenant en outre :
la remise à zéro du compte pour tous les clients (130) dont le compte a atteint la valeur prédéterminée.

6. Support de mémorisation lisible par ordinateur présentant un moyen de code de programme pour réaliser toutes les étapes selon l'une quelconque des revendications 1 à 5.

7. Appareil de gestion de requêtes provenant de clients d'un service de localisation, comprenant un moyen pour réaliser des opérations afin d'exécuter un procédé selon l'une quelconque des revendications 1 à 5.
